# EUROPEAN PATENT SPECIFICATION

(11) **EP 4 099 068 B1**
(45) Date of publication and mention of the grant of the patent: **06.05.2026**
(21) Application number: 22151185.0
(22) Date of filing: 12.01.2022
(51) Int. Cl.: G02B 6/38

(54) **HIGH-DENSITY CONNECTOR**
VERBINDER VON HOHER DICHTE
CONNECTEUR HAUTE DENSITÉ

(30) Priority: 02.06.2021 CN 202110613875
(43) Date of publication of application: 07.12.2022
(73) Proprietor: Huizhou Fibercan Industrial Co., LTD, Huizhou 516122 (CN)
(72) Inventor: LI, Yaole, Huizhou 516122 (CN)
(74) Representative: Zaboliene, Reda

(56) References cited:
- CN-A- 110 658 590
- CN-U- 205 620 583
- US-A1- 2018 252 872
- US-A1- 2020 049 902

## Description

### TECHNICAL FIELD

The application relates to the technical field of optical fibers, and more particularly to a high-density optical fiber connector.

### BACKGROUND

Optical fiber is a light transmission tool that allows light to be transmitted in a fiber made of glass or plastic using the principle of total reflection. Manufacturers in related industries are all committed to the development of optical fiber transmission, making optical fibers gradually replace traditional metal transmission lines, and have been widely used as signal transmission media. Furthermore, in order to enable the optical fiber to be connected to various electronic devices and the information transmitted by it is used by these electronic devices, a connector must be used as an intermediary between the optical fiber and the electronic device to achieve the purpose of connection.

Generally, the optical fiber connector system consists of an adapter installed in the electronic device and used as the female connector of the connector, and an optical fiber connector as the male connector of the connector. When the optical fiber connector is inserted into the adapter, the connection relationship is formed, so as to achieve the purpose of data transmission.

CN205620583U discloses a LC high density pair connector, wherein a pair of connectors having the same structure connect to a splint, the connector includes a preceding frame cover, into which a fixed portion of a pull rod is inserted.

US2020049902A1 discloses a LC duplex connector comprising front casings, rear casings, an upper cover panel and a lower cover panel; each of the front casings is provided with a press strip, and a fastening point is provided on the press strip.

CN110658590A discloses a connector and a push-pull member thereof, a push-pull member that is capable of reciprocating in the front-rear direction is arranged on a shell, and the push-pull member has an unlocking stroke that reciprocates back and forth under force.

A plurality of optical fiber adapters are installed on the servers in the existing computer room, and communicate with the external data by connecting with the optical fiber connectors; however, in a highly intensive installation environment, the traditional connector is extremely inconvenient to use, whether plugging or unplugging for inspection, it is not only being time-consuming, but also quite inconvenient for plugging and unplugging.

### SUMMARY

Aiming at the technical defects existing in the background art, a high-density optical fiber connector according to the independent claim 1 is provided, and more details of the invention are as defined in the dependent claims 2-8.

The beneficial effects of the present application are: the push-pull rod is used to connect the pressing elastic piece and the housing, which ensures the stable connection of the structure and realize the free and accurate plugging and unplugging in a highly intensive installation environment, and at the same time, the connection relationship between the components is stable, which is conducive to the stability of the connector parameters, moreover, the structure is simple and convenient for operation and production, and also has the advantages of low cost and easy promotion.

### BRIEF DESCRIPTION OF THE DRAWINGS

Figure 1 is a schematic diagram of the three-dimensional structure of the present application.
Figure 2 is a three-dimensional cross-sectional view of the present application.
Figure 3 is a schematic diagram of the internal component structure of the present application.
Figure 4 is a schematic diagram of the three-dimensional structure of the metal plug-in device of the present application.
Figure 5 is a three-dimensional cross-sectional view of the metal plug-in device of the present application.
Figure 6 is a schematic diagram of the three-dimensional structure of the housing of the present application.
Figure 7 is a three-dimensional cross-sectional view of the housing of the present application.
Figure 8 is a schematic diagram of the three-dimensional structure of the push-pull rod of the present application.

In which: connecting joint 1, cable 11, tail sleeve 2, sleeving tube 201, housing 3, limiting block 301, limiting post 302, limiting plate 303, limiting groove 304, connecting tube 305, engaging protrusion 306, positioning block 307, metal plug-in device 4, pressing elastic piece 401, clamping hook 402, pin tube 403, metal stopper cavity 404, connecting channel 405, engaging hole 406, protective cap 407, clamping block 408, push-pull rod 5, transmission rod 501, limiting structure 502, push-pull handle 503, moving groove 504, arc-shaped upwarp portion 505, protrusion 506, reinforcing strip 507, arc-shaped recess 508, metal fiber bundle tube 6, clamping structure 601, extension tube 7, metal stopper 701, spring 702, pin 703.

### DETAILED DESCRIPTION

The implementation of the present application are described below with reference to the accompanying drawings and related embodiments, it should be noted that the following related embodiments are not according to the invention and are present for illustration purposes only.

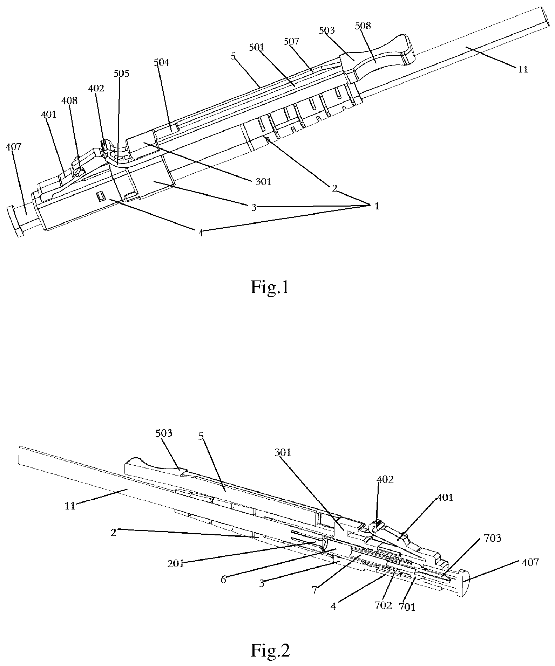

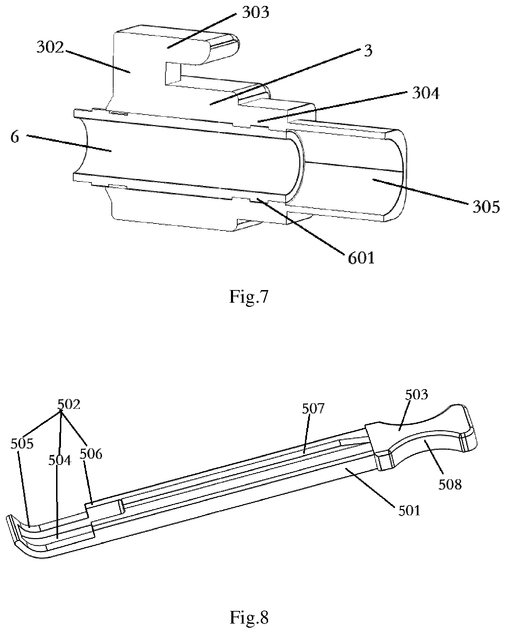

Referring to Figures 1 to 8, a high-density optical fiber connector is provided, which includes a connecting joint 1 and a cable 11 connected to the connecting joint 1, wherein the connecting joint 1 comprises a hollow tail sleeve 2, a hollow housing 3 and a hollow metal plug-in device 4 sequentially connected by plug-fitting, a limiting block 301 is provided on the top of the housing 3, a cross-sectional shape of the metal plug-in device 4 is a Chinese character " 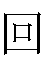 " shape, the integrally formed metal plug-in device 4 is provided with a pressing elastic piece 401 at its top, a clamping hook 402 is provided at the end of the pressing elastic piece 401, the clamping hook 402 and the limiting block 301 are connected by a limiting structure 502 of a push-pull rod 5, the push-pull rod 5 comprises a transmission rod 501 and a push-pull handle 503 which are integrally formed with the limiting structure 502, the push-pull handle 503 is connected to a rear end of the transmission rod 501, the limiting structure 502 is provided with a hollow moving groove 504, a front end of the limiting structure 502 is bent upward to form an arc-shaped upwarp portion 505, the rear end of the limiting structure 502 is provided with a protrusion 506 whose top is flush with the transmission rod 501.

As a further solution of the present application, clamping blocks 408 are provided on both sides at the middle part of the pressing elastic piece 401, and the clamping hook 402 is bent upward into an unclosed circular ring.

As a further solution of the present application, the limiting structure 502 is arranged at a front end of the transmission rod 501, and a long reinforcing strip 507 is arranged at a top center of the transmission rod 501, both sides of the push-pull handle 503 are provided with inwardly curved arc-shaped recesses 508, the bottom surfaces of the limiting structure 502, the push-pull handle 503 and the transmission rod 501 are flush with a same horizontal plane.

As a further solution of the present application, an overall shape of the limiting block 301 is in a "T" shape, and the integrally formed limiting block 301 comprises a limiting post 302 and a limiting plate 303 arranged above the limiting post 302, the width dimension of the limiting plate 303 is not less than the width dimension of the push-pull rod 5, the height of the limiting post 302 is lower than the height of the protrusion 506, the width of the limiting plate 303 is greater than the width of the moving groove 504, and the limiting post 302 is located in the moving groove 504, and the limiting plate 303 is located on a front side of the protrusion 506.

As a further solution of the present application, a sleeving tube 201 is sleeved at the front end of the tail sleeve 2, and the cable 11 is inserted into a rear end of the tail sleeve 2.

As a further solution of the present application, the housing 3 is provided with a metal fiber bundle tube 6 made of metal inside, and front and rear ends of the metal fiber bundle tube 6 are both provided with a clamping structure 601. The sleeving tube 201, at its front end, is sleeved on the rear end of the metal fiber bundle tube 6 through the clamping structure 601, the housing 3 is provided with an internal limiting groove 304 corresponding to the clamping structure 601 at the front end of the metal fiber bundle tube 6.

As a further solution of the present application, a front end of the housing 3 is provided with a connecting tube 305 connected with the rear end of the metal plug-in device 4, both sides of the connecting tube 305 are provided with outwardly facing engaging protrusions 306, and the connecting tube 305 is substantially a structure with an outer square profile and an inner round hole, and positioning blocks 307 are provided on two lateral surfaces of the housing 3.

As a further solution of the present application, an extension tube 7 is inserted into a front end of the connecting tube 305, the extension tube 7 extends into the metal plug-in device 4, a front end of the extension tube 7 is inserted into a lower end of a metal stopper 701, an outer surface of the extension tube 7 is provided with a spring 702, the radius of the spring 702 is consistent with the radius of the metal fiber bundle tube 6.

As a further solution of the present application, the hollow tube of the metal plug-in device 4 sequentially comprises a pin tube 403, a metal stopper cavity 404 and a connecting channel 405 from front to back, an outer wall of the connecting tube 305 closely fits with an inner wall of the connecting channel 405, both sides of the connecting channel 405 are provided with engaging holes 406 corresponding to the engaging protrusions 306, and a protective cap 407 is inserted into the pin tube 403.

As a further solution of the present application, the metal stopper 701 is composed of three major structures: a spherical hollow protrusion at the front end, a hollow quadrangular prism in the middle, and a hollow cylinder at the rear end; a pin 703 is inserted into the front end of the metal stopper 701, the contour of the metal stopper cavity 404 is corresponding to the outer contour of the metal stopper 701, and the metal stopper 701 is arranged in the metal stopper cavity 404.

As shown in Figure 1 to Figure 8, as an embodiment of the present application, the limiting block 301 is provided on the top of the housing 3, the top of the metal plug-in device 4 is provided with an integrally formed pressing elastic piece 401, the end of the pressing elastic piece 401 is provided with a clamping hook 402, a push-pull rod 5 is provided between the clamping hook 402 and the limiting block 301, the push-pull rod 5 includes an integrated transmission rod 501, a limiting structure 502 and a push-pull handle 503, the limiting block 301 of the housing 3 is used to limit the push-pull rod 5, so that the push-pull rod 5 and the clamping hook 402 of the metal plug-in device 4 are kept connected at all times, the pressing elastic piece 401 moves downward by pulling the push-pull rod 5 to loosen the connection with the socket. When the present application is plugged into the socket, the user pulls the push-pull rod 5 so that the pressing elastic piece 401 is pressed down and the socket is released, so that the connector of the present application is easily unplugged from the highly intensive socket through the push-pull rod 5. Or when the user needs to plug the connector of the present application into the socket, the connector is inserted into the socket through the push-pull rod 5, and the push-pull rod 5 is resisted by the limiting block 301, therefore, sufficient thrust is provided for the insertion of the present application into the socket, and the connector is easily and accurately inserted into the highly intensively arranged sockets. The elastic force of the pressing elastic piece 401 ensures the upward limiting function without external force. The design of the structure facilitates easy removal and insertion of the connector in the present application in a highly intensively arranged optical fiber insertion environment, thereby improving the working efficiency of optical fiber insertion and facilitating inspection and replacement.

As shown in Figures 1 to 8, as an embodiment of the present application, the clamping hook 402 is bent upward into an unclosed ring shape, and the front end of the limiting structure 502 is provided with an upwardly bent arc-shaped upwarp portion 505, when the push-pull rod 5 is pulled, the arc-shaped upwarp portion 505 is configured to move the pressing elastic piece 401 downward through the clamping hook 402, thereby, the clamping hook is separated from the limit mechanism of the socket, and the connector is separated from it, at the same time, the arc-shaped upwarp portion 505 is also blocked by the limiting block 301 of the housing 3 when the push-pull rod 5 moves backward. The overall shape of the limiting block 301 is a "T" shape, and the limiting post 302 is located in the moving groove 504, the rear end of the limiting structure 502 is provided with a protrusion 506 whose top is flush with the transmission rod 501, the limiting plate 303 is located on the front side of the protrusion 506, the moving groove 504 allows the push-pull rod 5 to move freely under the limiting block 301, the limiting plate 303 is located on the front side of the protrusion 506, which is capable of limiting the forward movement of the push-pull rod 5, and provide forward thrust when inserted into the socket of the present application, at the same time, the form fit of the arc-shaped upwarp portion 505 and the clamping hook 402 is capable of preventing the clamping hook 402 from being separated from the push-pull rod 5, and at the same time, the limiting block 301 has a "T" shape, which restricts the push-pull rod 5 from escaping from the housing 3, thereby further ensuring that the structure of the present application is complete during use, and preventing the push-pull rod 5 from being detached from the clamping hook 402 and lost. At the same time, sufficient thrust is provided to facilitate the insertion of the present application. The overall structure of the push-pull rod 5 of the present application is integrally formed, and compared with the traditional structure, the overall structure is simple and the overall strength is good. The connector in the present application is convenient to the plug connection and removal in the dense arrangements of the sockets. In addition, the overall structure of the present application is simple and low in production cost, thereby being convenient for production, assembly and promotion.

As shown in Figure 1 to Figure 8, as an embodiment of the present application, the top center of the transmission rod 501 is provided with a reinforcing strip 507, both sides of the push-pull handle 503 are provided with inwardly curved arc-shaped recesses 508, the bottom surfaces of the limiting structure 502, the push-pull handle 503, and the transmission rod 501 are flush with the same horizontal plane. The reinforcing strip 507 is beneficial to provide greater pulling/thrust force for the push-pull rod 5, during use, the problem of easy breakage of the push-pull rod 5 due to excessive thrust/pull force is avoided, so that the connector in the present application is capable of being applied to broader working environments, and the service life of the push-pull rod 5 is prolonged. The arc-shaped recess 508 is configured to be aligned to the bottom surfaces of the limiting structure 502, the push-pull handle 503 and the transmission rod 501 in the same horizontal plane, thus the user holds the end of the push-pull rod 5 through the arc-shaped recess 508, and then push and pull it to realize the easy and convenient use of the connector in a highly intensively arrangement environment, the bottom surfaces being on the same horizontal plane facilitate the sliding of the push-pull rod 5 on the surfaces of the housing 3 and the tail tube, which facilitates the operation of the push-pull rod 5.

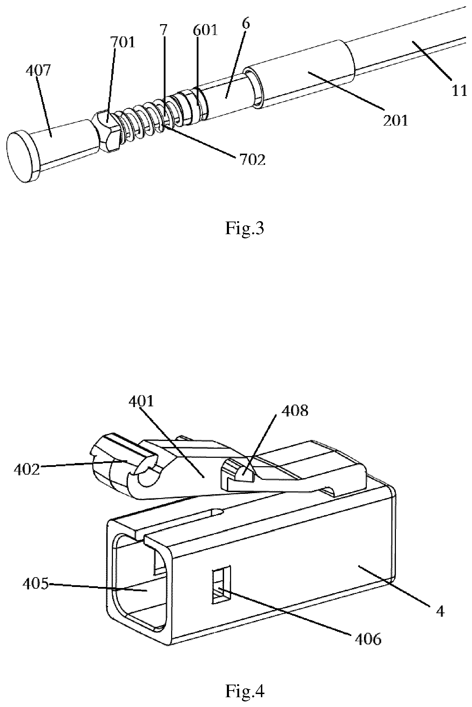

As shown in FIGS. 3 to 5, as an embodiment of the present application, the cross-sectional shape of the metal plug-in device 4 is a Chinese character " 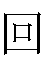 "-like shape, the metal stopper 701 is composed of three major structures: a spherical hollow protrusion at the front end, a hollow quadrangular prism in the middle, and a hollow cylinder at the rear end. The contour of the metal stopper cavity 404 is corresponding to the outer contour of the metal stopper 701, and the metal stopper 701 is disposed in the metal stopper cavity 404. The cross-section of the metal plug-in device 4 is shaped as a rectangular loop (similar to Chinese character " 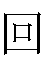 ") and is form fitting with the rear end of the metal stopper 701, the metal stopper 701 is attached to the inner wall of the metal plug-in device 4 in the metal stopper cavity 404, the inner quadrangular shape is conducive to the cooperation between the metal stopper 701 and the metal plug-in device 4, and avoids the problem of interference in case of the traditional polygonal metal stopper 701. Such installation is more firm and fit, and conducive to the stability of the connector parameters and signal transmission.

As shown in Figures 1 to 3, it should be noted that the tail sleeve 2, the housing 3 and the metal plug-in device 4 are connected in sequence by plug-fitting, both the front and rear ends of the metal fiber bundle tube 6 are provided with a clamping structure 601, the front end of the sleeving tube 201 is sleeved on the rear end of the metal fiber bundle tube 6 through the clamping structure 601, the inside of the housing 3 is provided with the limiting groove 304 corresponding to the clamping structure 601 at the front end of the metal fiber bundle tube 6, and the outer wall of the connecting tube 305 closely fits with the inner wall of the connecting channel 405, both sides of the connecting channel 405 are also provided with engaging holes 406 corresponding to the engaging protrusions 306. Most of the components of the present application are assembled in the form of snap-fitting, thus the assembling method is simple and convenient for production, and the production process of the components is simplified.

As shown in Figure 2 and Figure 3, it should be noted that, the outer surface of the extension tube 7 is provided with a spring 702, and the radius of the spring 702 is consistent with the radius of the metal fiber bundle tube 6. The spring 702 combined with the connection between the connecting tube 305 and the connecting channel 405 makes the connection between the connecting tube 305 and the connecting channel 405 tighter, and through the elastic force of the spring 702, the connecting tube 305 is squeezed backwards, and the connection between the engaging protrusion 306 and the engaging hole 406 will not be easily loosened, thus, the connecting tube 305 and the connecting channel 405 are tightly connected.

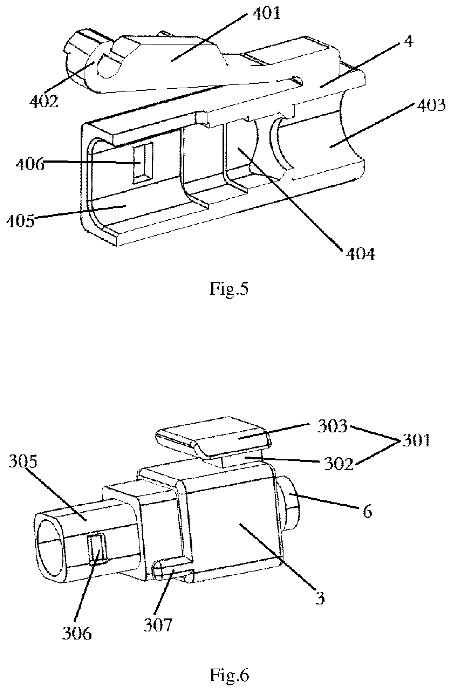

As shown in Figure 1 and Figure 6, it should be noted that, a protective cap 407 is inserted into the pin tube 403, and a pin 703 is inserted into the front end of the metal stopper 701. Before the connector is used, the protective cap 407 is used to protect the pin 703 and prevent the pin 703 from being damaged before use, and at the same time, the user easily pulls off the protective cap 407 when installing the present application. Positioning blocks 307 are provided on both sides of the surface of the housing 3, the positioning blocks 307 are used to determine the direction of the housing 3 and play a guiding role.

## Claims

1. A high-density optical fiber connector, comprising a connecting joint (1) and a cable (11) connected to the connecting joint (1), wherein the connecting joint (1) comprises a hollow tail sleeve (2), a hollow housing (3) and a hollow metal plug-in device (4) sequentially connected by plug-fitting, a limiting block (301) is provided on the top of the hollow housing (3), the cross-section of the hollow metal plug-in device (4) is shaped as a rectangular loop, the hollow metal plug-in device (4) is integrally formed and provided with a pressing elastic piece (401) on its top, a clamping hook (402) is provided at the end of the pressing elastic piece (401), the clamping hook (402) and the limiting block (301) are connected by a limiting structure (502) of a push-pull rod (5), the push-pull rod (5) further comprises a transmission rod (501) and a push-pull handle (503) which are integrally formed with the limiting structure (502), the push-pull handle (503) is connected to the rear end of the transmission rod (501), the limiting structure (502) is provided with a hollow moving groove (504), the front end of the limiting structure (502) is bent upward to form an arc-shaped upwarp portion (505), and the rear end of the limiting structure (502) is provided with a protrusion (506) whose top is flush with the transmission rod (501), wherein a sleeving tube (201) is sleeved at the front end of the hollow tail sleeve (2), and the cable (11) is inserted into the rear end of the hollow tail sleeve (2), and the hollow housing (3) is provided with a metal fiber bundle tube (6) inside, and clamping structures (601) are provided on the front and rear ends of the metal fiber bundle tube (6); the sleeving tube (201), at its front end, is sleeved on the metal fiber bundle tube (6) through the clamping structure (601) at the rear end of metal fiber bundle tube (6), and the hollow housing (3) is provided with a limiting groove (304) corresponding to the clamping structure (601) at the front end of the metal fiber bundle tube (6),
wherein a hollow tube formed by the hollow metal plug-in device (4) comprises a pin tube (403), a metal stopper cavity (404) and a connecting channel (405) sequentially arranged from front to back, and
wherein when the push-pull rod (5) is pulled, the arc-shaped upwarp portion (505) of the limiting structure (502) moves the pressing elastic piece (401) downward through the clamping hook (402) of the pressing elastic piece (401), such that the high-density optical fiber connector is separated from a socket.

2. The high-density optical fiber connector of claim 1, wherein, clamping blocks (408) are provided on both sides at the middle part of the pressing elastic piece (401), and the clamping hook (402) is bent upward into an unclosed circular ring.

3. The high-density optical fiber connector of claim 1, wherein, the limiting structure (502) is arranged at the front end of the transmission rod (501), and a long reinforcing strip (507) is arranged at the top center of the transmission rod (501), the push-pull handle (503) is provided with inwardly curved arc-shaped recesses (508) on both sides, and the bottom surfaces of the limiting structure (502), the push-pull handle (503) and the transmission rod (501) are flush with a same horizontal plane.

4. The high-density optical fiber connector of claim 3, wherein, an overall shape of the limiting block (301) is in a "T" shape, and the limiting block (301) is integrally formed and comprises a limiting post (302) and a limiting plate (303) arranged above the limiting post (302), the width dimension of the limiting plate (303) is not less than the width dimension of the push-pull rod (5), the height of the limiting post (302) is lower than the height of the protrusion (506), the width of the limiting plate (303) is greater than the width of the moving groove (504), and the limiting post (302) is located in the moving groove (504), and the limiting plate (303) is located on the front side of the protrusion (506).

5. The high-density optical fiber connector of claim 1, wherein, the hollow housing (3), at its front end, is provided with a connecting tube (305) configured to connect with the rear end of the hollow metal plug-in device (4), both sides of the connecting tube (305) are provided with outwardly facing engaging protrusions (306), the connecting tube (305) is a structure with an outer square profile and an inner round hole, and positioning blocks (307) are provided on two lateral surfaces of the hollow housing (3).

6. The high-density optical fiber connector of claim 5, wherein, an extension tube (7) is inserted into the front end of the connecting tube (305), the extension tube (7) extends into the hollow metal plug-in device (4), the front end of the extension tube (7) is inserted into the lower end of a metal stopper (701), a spring (702) is provided on the outer surface of the extension tube (7), and the radius of the spring (702) is consistent with the radius of the metal fiber bundle tube (6).

7. The high-density optical fiber connector of claim 6, wherein, the outer wall of the connecting tube (305) closely fits with the inner wall of the connecting channel (405), the connecting channel (405) are provided with engaging holes (406) corresponding to the engaging protrusions (306) on both sides, and a protective cap (407) is inserted into the pin tube (403).

8. The high-density optical fiber connector of claim 7, wherein, the metal stopper (701) is composed of: a spherical hollow protrusion at the front end, a hollow quadrangular prism in the middle, and a hollow cylinder at the rear end, wherein a pin (703) is inserted into the front end of the metal stopper (701), the contour of the metal stopper cavity (404) is corresponding to the outer contour of the metal stopper (701), and the metal stopper (701) is arranged in the metal stopper cavity (404).

## Patentansprüche

1. Lichtwellenleiter-Steckverbinder mit hoher Dichte, umfassend einen Stecker (1) und ein mit dem Stecker (1) verbundenes Kabel (11), wobei der Stecker (1) eine hohle Endhülse (2), ein hohles Gehäuse (3) und eine hohle metallische Steckvorrichtung (4) umfasst, die nacheinander durch Steckverbindung verbunden sind, ein Begrenzungsblock (301) an der Oberseite des hohlen Gehäuses (3) vorgesehen ist, der Querschnitt der hohlen metallischen Steckvorrichtung (4) als rechteckige Schlaufe ausgebildet ist, die hohle metallische Steckvorrichtung (4) einstückig geformt ist und an ihrer Oberseite mit einem Druckfederelement (401) versehen ist, ein Klemmhaken (402) am Ende des Druckfederelements (401) angeordnet ist, der Klemmhaken (402) und der Begrenzungsblock (301) durch eine Begrenzungsstruktur (502) einer Schubstange (5) verbunden sind, die Schubstange (5) ferner eine Antriebsstange (501) und einen Schubgriff (503) umfasst, die einstückig mit der Begrenzungsstruktur (502) geformt sind, der Schubgriff (503) mit dem hinteren Ende der Antriebsstange (501) verbunden ist, die Begrenzungsstruktur (502) mit einer hohlen Bewegungsnut (504) versehen ist, das vordere Ende der Begrenzungsstruktur (502) nach oben gebogen ist, um einen bogenförmigen Aufwärtsbiegeabschnitt (505) zu bilden, und das hintere Ende der Begrenzungsstruktur (502) mit einem Vorsprung (506) versehen ist, dessen Oberseite bündig mit der Antriebsstange (501) abschließt.
wobei ein Umhüllungsrohr (201) am vorderen Ende der hohlen Endhülse (2) aufgeschoben ist und das Kabel (11) in das hintere Ende der hohlen Endhülse (2) eingeführt ist, und das hohle Gehäuse (3) mit einem Metallfaserbündelrohr (6) im Inneren versehen ist, und Klemmstrukturen (601) am vorderen und hinteren Ende des Metallfaserbündelrohrs (6) vorgesehen sind; das Umhüllungsrohr (201) an seinem vorderen Ende durch die Klemmstruktur (601) am hinteren Ende des Metallfaserbündelrohrs (6) auf das Metallfaserbündelrohr (6) aufgeschoben wird, und das hohle Gehäuse (3) mit einer Begrenzungsnut (304) versehen ist, die der Klemmstruktur (601) am vorderen Ende des Metallfaserbündelrohrs (6) entspricht,
wobei ein Hohlrohr, das durch die hohle metallische Steckvorrichtung (4) gebildet wird, ein Stiftrohr (403), einen Metallanschlaghohlraum (404) und einen Verbindungskanal (405) umfasst, die von vorne nach hinten nacheinander angeordnet sind, und
wobei beim Ziehen der Schubstange (5) der bogenförmige Aufwärtsbiegeabschnitt (505) der Begrenzungsstruktur (502) das Druckfederelement (401) über den Klemmhaken (402) des Druckfederelements (401) nach unten bewegt, sodass der Lichtwellenleiter-Steckverbinder mit hoher Dichte von einer Steckdose getrennt wird.

2. Lichtwellenleiter-Steckverbinder mit hoher Dichte nach Anspruch 1, wobei an beiden Seiten des mittleren Teils des Druckfederelements (401) Klemmblöcke (408) vorgesehen sind und der Klemmhaken (402) nach oben zu einem nicht geschlossenen Ring gebogen ist.

3. Lichtwellenleiter-Steckverbinder mit hoher Dichte nach Anspruch 1, wobei die Begrenzungsstruktur (502) am vorderen Ende der Antriebsstange (501) angeordnet ist und ein langer Verstärkungsstreifen (507) im oberen Zentrum der Antriebsstange (501) angeordnet ist, der Schubgriff (503) beidseitig mit nach innen gewölbten bogenförmigen Vertiefungen (508) versehen ist, und die Bodenflächen der Begrenzungsstruktur (502), des Schubgriffs (503) und der Antriebsstange (501) bündig mit einer gemeinsamen horizontalen Ebene abschließen.

4. Lichtwellenleiter-Steckverbinder mit hoher Dichte nach Anspruch 3, wobei eine Gesamtform des Begrenzungsblocks (301) eine T-Form aufweist und der Begrenzungsblock (301) einstückig ausgebildet ist und einen Begrenzungsstift (302) sowie eine über dem Begrenzungsstift (302) angeordnete Begrenzungsplatte (303) umfasst, wobei die Breitenabmessung der Begrenzungsplatte (303) nicht geringer ist als die Breitenabmessung der Schubstange (5), die Höhe des Begrenzungsstifts (302) geringer ist als die Höhe des Vorsprungs (506), die Breite der Begrenzungsplatte (303) größer ist als die Breite der Bewegungsnut (504), und der Begrenzungsstift (302) in der Bewegungsnut (504) angeordnet ist und die Begrenzungsplatte (303) auf der Vorderseite des Vorsprungs (506) angeordnet ist.

5. Lichtwellenleiter-Steckverbinder mit hoher Dichte nach Anspruch 1, wobei das hohle Gehäuse (3) an seinem vorderen Ende mit einem Verbindungsrohr (305) versehen ist, das dazu ausgelegt ist, mit dem hinteren Ende der hohlen metallischen Steckvorrichtung (4) zu verbinden, beide Seiten des Verbindungsrohrs (305) mit nach außen weisenden Eingriffsvorsprüngen (306) versehen sind, das Verbindungsrohr (305) eine Struktur mit einem äußeren Vierkantprofil und einer inneren Rundbohrung aufweist und an zwei seitlichen Oberflächen des hohlen Gehäuses (3) Positionierblöcke (307) vorgesehen sind.

6. Lichtwellenleiter-Steckverbinder mit hoher Dichte nach Anspruch 5, wobei ein Verlängerungsrohr (7) in das vordere Ende des Verbindungsrohrs (305) eingesetzt ist, das Verlängerungsrohr (7) in die hohle metallische Steckvorrichtung (4) hineinragt, das vordere Ende des Verlängerungsrohrs (7) in das untere Ende eines metallischen Anschlags (701) eingeführt ist, eine Feder (702) auf der Außenfläche des Verlängerungsrohrs (7) angeordnet ist und der Radius der Feder (702) mit dem Radius des Metallfaserbündelrohrs (6) übereinstimmt.

7. Lichtwellenleiter-Steckverbinder mit hoher Dichte nach Anspruch 6, wobei die Außenwand des Verbindungsrohrs (305) eng an der Innenwand des Verbindungskanals (405) anliegt, der Verbindungskanal (405) mit Eingriffsöffnungen (406) versehen ist, die den Eingriffsvorsprüngen (306) auf beiden Seiten entsprechen, und eine Schutzkappe (407) in die Stiftrohr (403) eingeführt ist.

8. Lichtwellenleiter-Steckverbinder mit hoher Dichte nach Anspruch 7, wobei der Metallanschlag (701) zusammengesetzt ist aus: einem kugelförmigen hohlen Vorsprung am vorderen Ende, einem hohlen viereckigen Prisma in der Mitte und einem hohlen Zylinder am hinteren Ende, wobei ein Stift (703) in das vordere Ende des Metallanschlags (701) eingeführt ist, die Kontur des Metallanschlaghohlraums (404) der Außenkontur des Metallanschlags (701) entspricht und der Metallanschlag (701) in dem Metallanschlaghohlraum (404) angeordnet ist.

## Revendications

1. Connecteur de fibre optique à haute densité, comprenant un joint de connexion (1) et un câble (11) connecté au joint de connexion (1), dans lequel le joint de connexion (1) comprend un manchon de queue creux (2), un boîtier creux (3) et un dispositif enfichable métallique creux (4) connectés de façon séquentielle par emboîtement, un bloc de limitation (301) est disposé sur le sommet du boîtier creux (3), la section transversale du dispositif enfichable métallique creux (4) est en forme de boucle rectangulaire, le dispositif enfichable métallique creux (4) est formé d'un seul tenant et pourvu d'une pièce élastique de pression (401) sur la partie supérieure, un crochet de serrage (402) est disposé à l'extrémité de la pièce élastique de pression (401), le crochet de serrage (402) et le bloc de limitation (301) sont connectés par une structure de limitation (502) d'une tige de poussée-traction (5), la tige de poussée-traction (5) comprend en outre une tige de transmission (501) et une poignée de poussée-traction (503) qui sont formées d'un seul tenant avec la structure de limitation (502), la poignée de poussée-traction (503) est connectée à l'extrémité arrière de la tige de transmission (501), la structure de limitation (502) est pourvue d'une rainure mobile creuse (504), l'extrémité avant de la structure de limitation (502) est pliée vers le haut pour former une portion relevée (505) en forme d'arc, et l'extrémité arrière de la structure de limitation (502) est pourvue d'une saillie (506) dont le sommet est au même niveau que la tige de transmission (501),
dans lequel un tube de gainage (201) est gainé à l'extrémité avant du manchon de queue creux (2), et le câble (11) est inséré dans l'extrémité arrière du manchon de queue creux (2), et le boîtier creux (3) est pourvu d'un tube (6) de faisceau de fibres métalliques à l'intérieur, et des structures de serrage (601) sont disposés sur les extrémités avant et arrière du tube (6) de faisceau de fibres métalliques ; le tube de gainage (201), à son extrémité avant, est gainé sur le tube (6) de faisceau de fibres métalliques à travers la structure de serrage (601) à l'extrémité arrière du tube (6) de faisceau de fibres métalliques, et le boîtier creux (3) est pourvu d'une rainure de limitation (304) correspondant à la structure de serrage (601) à l'extrémité avant du tube (6) de faisceau de fibres métalliques,
dans lequel un tube creux formé par le dispositif enfichable métallique creux (4) comprend un tube de broche (403), une cavité (404) de bouchon métallique et un canal de connexion (405) disposés séquentiellement d'avant en arrière, et
dans lequel, lorsque la tige de poussée-traction (5) est tirée, la portion relevée (505) en forme d'arc de la structure de limitation (502) déplace la pièce élastique de pression (401) vers le bas à travers le crochet de serrage (402) de la pièce élastique de pression (401), de sorte que le connecteur de fibre optique à haute densité est séparé d'une prise.

2. Connecteur de fibre optique à haute densité selon la revendication 1, dans lequel des blocs de serrage (408) sont disposés des deux côtés au niveau de la partie médiane de la pièce élastique de pression (401), et le crochet de serrage (402) est plié vers le haut en un anneau circulaire non fermé.

3. Connecteur de fibre optique à haute densité selon la revendication 1, dans lequel, la structure de limitation (502) est agencée à l'extrémité avant de la tige de transmission (501), et une longue bande de renforcement (507) est agencée au centre supérieur de la tige de transmission (501), la poignée de poussée-traction (503) est pourvue d'évidements (508) en forme d'arc incurvés vers l'intérieur des deux côtés, et les surfaces inférieures de la structure de limitation (502), de la poignée de poussée-traction (503) et de la tige de transmission (501) sont au même niveau qu'un même plan horizontal.

4. Connecteur de fibre optique à haute densité selon la revendication 3, dans lequel, une forme globale du bloc de limitation (301) est en forme de « T », et le bloc de limitation (301) est formé d'un seul tenant et comprend un montant de limitation (302) et une plaque de limitation (303) agencée au-dessus du montant de limitation (302), la dimension de largeur de la plaque de limitation (303) n'est pas inférieure à la dimension de largeur de la tige de poussée-traction (5), la hauteur du montant de limitation (302) est inférieure à la hauteur de la saillie (506), la largeur de la plaque de limitation (303) est supérieure à la largeur de la rainure mobile (504), et le montant de limitation (302) est situé dans la rainure mobile (504), et la plaque de limitation (303) est située sur le côté avant de la saillie (506).

5. Connecteur de fibre optique à haute densité selon la revendication 1, dans lequel, le boîtier creux (3), à son extrémité avant, est pourvu d'un tube de connexion (305) configuré pour se connecter à l'extrémité arrière du dispositif enfichable métallique creux (4), les deux côtés du tube de connexion (305) sont pourvus de saillies d'engagement (306) tournées vers l'extérieur, le tube de connexion (305) est une structure avec un profil carré extérieur et un trou rond intérieur, et des blocs de positionnement (307) sont disposés sur deux surfaces latérales du boîtier creux (3).

6. Connecteur de fibre optique à haute densité selon la revendication 5, dans lequel, un tube d'extension (7) est inséré dans l'extrémité avant du tube de connexion (305), le tube d'extension (7) s'étend dans le dispositif enfichable métallique creux (4), l'extrémité avant du tube d'extension (7) est insérée dans l'extrémité inférieure d'un bouchon métallique (701), un ressort (702) est disposé sur la surface extérieure du tube d'extension (7), et le rayon du ressort (702) est cohérent avec le rayon du tube (6) de faisceau de fibres métalliques.

7. Connecteur de fibre optique à haute densité selon la revendication 6, dans lequel, la paroi externe du tube de connexion (305) s'adapte étroitement à la paroi interne du canal de connexion (405), le canal de connexion (405) est pourvu de trous d'engagement (406) correspondant aux saillies d'engagement (306) des deux côtés, et un capuchon de protection (407) est inséré dans le tube de broche (403).

8. Connecteur de fibre optique à haute densité selon la revendication 7, dans lequel le bouchon métallique (701) est composé de : une saillie creuse sphérique à l'extrémité avant, un prisme quadrangulaire creux au milieu, et un cylindre creux à l'extrémité arrière, dans lequel une broche (703) est insérée dans l'extrémité avant du bouchon métallique (701), le contour de la cavité de bouchon métallique (404) correspond au contour extérieur du bouchon métallique (701), et le bouchon métallique (701) est agencé dans la cavité de bouchon métallique (404).
